# EUROPÄISCHE PATENTSCHRIFT

(11) **EP 0 800 074 B1**
(45) Veröffentlichungstag und Bekanntmachung des Hinweises auf die Patenterteilung: **30.07.2003**
(21) Anmeldenummer: 97890054.6
(22) Anmeldetag: 20.03.1997
(51) Int. Cl.: G01N 21/31, G01N 21/47, G01N 33/49

(54) **Vorrichtung und Verwendung einer Vorrichtung zur Bestimmung der Konzentration von Hämoglobinderivaten in einer unverdünnten, unhämolysierten Vollblutprobe**
Apparatus and use of an apparatus for determining the concentration of hemoglobin derivatives in a non-diluted and non-hemolyzed whole blood sample
Dispositif et utilisation d'un dispositif pour la détermination de la concentration de dérivés d'hémoglobine dans un échantillon de sang entier non dilué et non hémolysé

(30) Priorität: 02.04.1996 AT 59196
(43) Veröffentlichungstag der Anmeldung: 08.10.1997
(73) Patentinhaber: F.HOFFMANN-LA ROCHE AG, 4070 Basel (CH)
(72) Erfinder: Hage, Roger, Dipl.-Ing., 8020 Graz (AT)
(74) Vertreter: Babeluk, Michael, Dipl.-Ing. Mag.

(56) Entgegenhaltungen:
- EP-A- 0 210 417
- EP-A- 0 575 712
- EP-A- 0 720 013
- WO-A-94/08237
- US-A- 3 713 743
- JOURNAL OF APPLIED SPECTROSCOPY, Bd. 63, Nr. 1, Januar 1996, NEW YORK, US, Seiten 43-48, XP002032982 E.K. NAUMENKO: "CHOICE OF WAVELENGTH FOR STABLE DETERMINATION OF CONCENTRATIONS OF HEMOGLOBIN DERIVATIVES FROM ABSORPTION SPECTRA OF ERYTHROCYTES"

## Beschreibung

Die Erfindung betrifft eine Vorrichtung zur Bestimmung der Konzentration von n Hämoglobinderivaten in einer unverdünnten, unhämolysierten, in einer Küvette vorliegenden Vollblutprobe, mit einer Einrichtung zur Bereitstellung eines kollimierten Primärstrahles, welcher zumindest n im wesentlichen monochromatische, schmalbandige Strahlungsanteile unterschiedlicher Wellenlänge aufweist, mit einer Detektionseinrichtung, welche die die Küvette durchdringende Strahlung misst, sowie mit einer mit der Detektionseinrichtung verbundenen Auswerteeinrichtung.

Die Bestimmung der Hämoglobinderivate O₂Hb, RHb, COHb, MetHb bzw. SHb im hämolysierten Blut, auch CO-Oxymetrie genannt, ist eine bekannte und zuverlässige Methode, welche auf der Transmissionsspektroskopie und dem Lambert-Beer'schen Absorptionsgesetz beruht. Die Vollblutprobe wird dabei entweder durch Ultraschall oder chemische Verfahren hämolysiert, um die unerwünschte Lichtstreuung zu beseitigen, bevor sie bei mehreren verschiedenen Wellenlängen bestrahlt wird. Es können dann maximal so viele Hämoglobinderivate bestimmt werden als unterschiedliche Wellenlängen zur Anregung verwendet wurden. Hämolysiertes Blut ist eine klare Lösung verschiedener Hämoglobinpigmente und folgt idealerweise dem Lamert-Beer'schen Gesetz für Absorption. Die Verwendung der Multikomponentenanalyse ermöglicht die Berechnung der unbekannten Konzentrationen.

Unhämolysiertes Vollblut hingegen ist eine Suspension von hämoglobinhaltigen roten Blutkörperchen in Plasma. Unterschiedliche Brechungsindizes für die roten Blutkörperchen und dem Plasma sind für die Lichtstreuung verantwortlich. Da die Abmessungen der roten Blutkörperchen (ca. 5 µm) um den Faktor 10 größer als die analytische Wellenlänge (sichtbares oder nahes Infrarotlicht) ist, kann für die Streuung eines einzigen Blutkörperchen die Mie-Theorie herangezogen werden. Da die Lichtstreuung diffus ist und die Abstände zwischen den einzelnen Blutkörperchen gering sind, kommt es zu komplizierten Mehrfachstreuungen. Dabei ist zu erwarten dass es auch zu Mehrfachabsorptionen des gestreuten Lichtes kommt. Ein weiteres Problem im unhämolysierten Vollblut stellt der Siebeffekt dar. Das einfallende Licht durchläuft unterschiedliche optische Wege. Ein Teil des Lichtstrahls trifft auf Blutkörperchen und wird geschwächt (absorbiert und/oder gestreut) ein anderer Teil durchläuft ungehindert und ungeschwächt die Probe. Die genannten Phänomene sind verantwortlich für die Ungültigkeit des Lambert-Beer'schen Gesetzes, welches theoretisch nur für kollimiertes Licht in einem Kontinuum gilt.

Weiters wurde auch bereits versucht, eine theoretische Formel für die Sauerstoffsättigung des unhämolysierten Vollblutes zu finden, um empirische Methoden der Pulsoximetrie zu untermauern. Es ist allerdings nicht gelungen, aus dem Summensignal der transmittierten Lichtintensität zusätzliche Parameter neben der Sauerstoffsättigung und dem Hämoglobingehalt zu gewinnen.

In Applied Optics, Vol.27, 4027-4033 (1988, "Comparison of Mie Theory and light scattering of red blood cells" wurde die winkelabhängige Verteilung der Streuung an stark verdünntem, unhämolysiertem Vollblut mit den Ergebnissen der exakten Mie-Theorie verglichen. Die in dieser Arbeit gewonnenen Ergebnisse können jedoch nicht auf unverdünntes, unhämolysiertes Vollblut übertragen werden, da hier Mehrfachstreuungen auftreten, die nur bei stark verdünnten Proben (2 %) vernachlässigt werden können.

Es ist zu erwarten, dass die winkelabhängige Verteilung des Streulichtes von mehreren Faktoren, wie Hämatokrit (H) dem mittleren zellulären Hämoglobingehalt (MCHC), der Zellform und der Zellausrichtung abhängt. Da diese Faktoren bei der herkömmlichen CO-Oxymetrie unbekannt und unzugänglich sind, können zuverlässige und genaue Ergebnisse mit unhämolysiertem Vollblut nur dann erreicht werden, wenn A) der Einfluss dieser Faktoren minimiert wird oder B) zusätzliche Information zur Verfügung steht.

Aus der WO 94/08237 ist eine eingangs zitierte Vorrichtung und Verfahren zur Bestimmung der Konzentration von Hämoglobinderivaten in einer unverdünnten, unhämolysierten Vollblutprobe bekannt geworden, wobei ein großflächiger Detektor verwendet wird, um einen größtmöglichen Teil des Streulichtes zu erfassen. Das Verfahren bedient sich einer komplizierten iterativen Korrektur der Streuung um aus dem gemessenen Gesamtsignal die Streulichtanteile zu eliminieren und das Lambert-Beer'sche Gesetz anwenden zu können. Die Konzentration der zu messenden Komponenten der Vollblutprobe erfolgt auf der Basis der detektierten Intensitäten bei jeder verwendeten Wellenlänge sowie auf vorbestimmten molaren Extinktionskoeffizienten für jede der zu messenden Komponenten.

Aus der EP-A2-0 575 712 ist es bekannt, direkt in einer in-vitro oder extrakorporalen Blutzirkulation gleichzeitig den Hämatokritwert und eine weitere Größe, beispielsweise die Natriumkonzentration zu bestimmen. Es werden dabei zwei Fotodetektoren verwendet, wobei der erste Detektor in Richtung des einfallenden Lichtes (zentral angeordnet) und der zweite abseits von der zentralen Richtung positioniert ist, sodass das vom zweiten Detektor erfasste Signal stark mit der Natriumkonzentration variiert. Das Messverfahren nutzt den Einfluss der Natriumkonzentration, welche die Zellform und das Zellvolumen beeinflusst, auf die Geometrie des transmittierten Lichtbündels.

Ausgehend von dem beschriebenen Stand der Technik besteht die Aufgabe der vorliegenden Erfindung darin eine Vorrichtung zur gleichzeitigen Bestimmung der Konzentration mehrerer Hämoglobinderivate in einer unverdünnten, unhämolysierten Vollblutprobe vorzuschlagen, wobei auf aufwendige iterative mathematische Auswerteverfahren weitgehend verzichtet werden soll.

Diese Aufgabe wird gemäß einer ersten, erfindungsgemäßen Ausführungsvariante dadurch gelöst, dass zur spektralen Erfassung eines kollimierten Zentralstrahles und zumindest eines Streustrahles eine optische Einrichtung, vorzugsweise ein drehbarer oder verschiebbarer Spiegel im Weg des Primärstrahles angeordnet ist, sodass der Primärstrahl in einer Grundstellung der optischen Einrichtung einen ersten Messort und in zumindest einer weiteren Stellung der optischen Einrichtung durch Umlenkung des Primärstrahles einen weiteren Messort in der Küvette definiert, dass die Detektion des durch die Küvette transmittierten Zentralstrahles, welcher vom ersten Messort in der Küvette ausgeht, mittels der Detektionseinrichtung an einer Messposition auf der Achse des Primärstrahles erfolgt, dass die Detektion des Streustrahles ausgehend vom zweiten Messort in der Küvette mittels der Detektionseinrichtung in derselben Messposition erfolgt, wobei die Achsen des Zentralstrahles und des bzw. der zu detektierenden Streustrahlen Winkel αᵢ einschließen, sowie dass die Auswerteeinrichtung eine Einheit zur Berechnung der Konzentration der n Hämoglobinderivate aus den in den zumindest zwei Messgeometrien erfassten, durch den ersten Messort und den zweiten Messort definierten, zumindest Messwerten und einer vorbestimmten Kalibriermatrix aufweist. Durch stufenweises Verschieben oder Verdrehen des Spiegels können auf einfache Weise eine Vielzahl aufeinanderfolgender, unterschiedlicher Streuwinkel αᵢ erfasst werden.

Gemäß einer zweiten, erfindungsgemäßen Ausführungsvariante ist vorgesehen, dass zur spektralen Erfassung eines kollimierten, durch die Küvette transmittierten Zentralstrahles und zumindest eines Streustrahles neben einer ersten Detektionseinrichtung an einer ersten Messposition auf der Achse des Prfmärstrahles zumindest eine weitere Detektionseinrichtung zur Streulichtmessung an einer zweiten Messposition im Winkel αᵢ zur Achse des Zentralstrahles angeordnet ist, dass die zweite Detektionseinrichtung kreisringförmig um die zentral angeordnete erste Detektionseinrichtung angeordnet ist, wobei die Achsen des Zentralstrahles und des bzw. der Streustrahlen Winkel αᵢ einschließen, sowie dass die Auswerteeinrichtung eine Einheit zur Berechnung der Konzentration der n Hämoglobinderivate aus den von den zumindest zwei Detektionseinrichtungen erfassten, zumindest 2n Messwerten und einer vorbestimmten Kalibriermatrix aufweist.

Die Winkel αᵢ können abhängig vom jeweiligen Messaufbau und der Anzahl unterschiedlicher Messpositionen bzw. Messorte beliebige Werte annehmen, solange eine Trennung des Zentralstrahles und der Streustrahlen gewährleistet ist.

Bevorzugt durchdringen die monochromatischen Strahlungsanteile unterschiedlicher Wellenlänge zeitlich nacheinander die Küvette, wodurch die Detektion der Messwerte vereinfacht wird. Es ist jedoch auch möglich, die monochromatischen Strahlungsanteile gleichzeitig in die Probe einzustrahlen und erst detektorseitig eine spektrale Auftrennung vorzusehen.

Im Gegensatz zu allen bisherigen bekannten Verfahren und Vorrichtungen verwendet die hier beschriebene Erfindung erstmals die im Streulicht enthaltene zusätzliche spektrale Information, um die notwendigen Korrekturen für eine genaue CO-Oximetrie im unhämolysierten Vollblut mittels Transmissionsspektroskopie in-vitro durchzuführen. Durch die Verwendung einer vorbestimmten Kalibriermatrix - welche durch einmaliges Vermessen bekannter Vollblutproben gewonnen werden kann - kann beispielsweise die Konzentration von O₂Hb, RHb, COHb, MetHb sowie SHb in einem Schritt ohne Iterationen und ohne nachfolgende Korrekturen durchgeführt werden.

Eine Verwendung der erfindungsgemässen Vorrichtungen zeichnet sich dadurch aus:
a) dass in die Probe ein Primärstrahl eingestrahlt wird, welcher zumindest n im wesentlichen monochromatische Strahlungsanteile unterschiedlicher Wellenlänge aufweist,
b) dass die die Probe durchdringende Strahlung in einer ersten, in der Achse des Primärstrahles bzw. des Zentralstrahles liegenden Messposition detektiert wird, wobei ein Satz von Absorptionswerten A₀ (λ) im Zentralstrahl bestimmt wird,
c) dass die die Probe durchdringende Strahlung in zumindest einer weiteren, In der Achse eines Streustrahles liegenden Messposition detektiert wird, welche einen Winkel αᵢ zur Achse des Primärstrahles einschließt, wobei zumindest ein weiterer Satz von Absorptionswerten Aαᵢ (λ) in der Streustrahlung bestimmt wird, sowie
d) dass die Konzentration der n Hämoglobinderivate als Funktion der Absorptionswerte A₀(λ), A_{αi}(λ) und einer vorbestimmten Kalibrationsmatrix K berechnet wird.

Die zusätzlich aus dem Streulichtanteil gewonnene Information gibt Aufschluss über die Korpuskulareigenschaften der roten Blutkörperchen, welche für das Scheitern der bisherigen Verfahren verantwortlich waren. Als zusätzliche Größe kann für das Auswerteverfahren das Intensitätsverhältnis I_{αi}(λ)/I₀(λ) herangezogen werden.

Bestrahlt man das unhämolysierte Blut mit n im wesentlichen monochromatischen, schmalbandigen Strahlungsanteilen unterschiedlicher Wellenlänge und misst beispielsweise in zwei Messpositionen, so erhält man 2n Signale, womit man maximal 2n Unbekannte bestimmen kann. Beispielsweise bei vier zu bestimmenden Komponenten (O₂Hb, RHb, COHb, MetHb) und vier Wellenlängen, kann man mit dem überbestimmten Gleichungssystem (acht Gleichungen), zusätzlich vier Faktoren berücksichtigen, wie z. B. den mittleren zellulären Hämoglobingehalt, den Hämatokrit, das Volumen und die Form eines roten Blutkörperchens.

Durch eine einmalige Anwendung effizienter multivarianter Kalibrationsmethoden im Labor, im speziell Partial Least Square (PLS) und Principle Component Regression (PCR), kann eine zuverlässige apriorische Kalibrationsmatrix bestimmt werden, die für jedes Gerät der gleichen Bauweise und konstanten optischen Bedingungen anzuwenden ist. Eine derartige Kalibrationsmatrix berücksichtigt bereits die nicht idealen Bedingungen, wie Abweichungen von der idealen Bandbreite der monochromatischen Strahlungsanteile sowie nicht ideale Extinktionskoeffizienten etc.

Eine zusätzliche einfache Kalibrierung und Korrektur, beispielsweise der Schichtdicke der Probe in der Küvette oder der Detektionsoptiken, um die verschiedenen Fertigungstoleranzen zu korrigieren, kann mittels klarer und trüber Kontrollflüssigkeiten durchgeführt werden. Die klare Kontrollflüssigkeit spricht ausschließlich die zentrale Messposition an. Hier kann mittels Farbstoffmessung eine Schichtdickenkorrektur durchgeführt werden, da das Lambert Beer'sche Gesetz gilt. Gleichzeitig können Sekundärreflexionen, die die empfindlichen Streulichtdetektoren erreichen, erfasst und korrigiert werden.

Bei der trüben Lösung wird eine bestimmte, definierte Winkelverteilung erwartet. Hier könnte eine Normierung durchgeführt werden, beispielsweise über das Verhältnis vom Streu- zu Zentrallicht, um die Empfindlichkeitstoleranzen der einzelnen Detektoren untereinander zu berücksichtigen.

Es liegt klar auf der Hand, dass die neue Methode unempfindlich gegenüber dem Grad der Hämolyse ist, und auch bei 100% hämolysiertem Blut genaue Ergebnisse liefern kann. In diesem Fall wäre das Signal in der bzw. den Streulichtpositionen Null, was auf eine Abwesenheit von Streuzentren in der Probe hinweist, sodass das Lambert Beer'sche Gesetz ausschließlich auf das Zentralsignal angewendet werden könnte.

Die Erfindung wird im folgenden anhand von schematisch dargestellten Ausführungsbeispielen näher erläutert. Es zeigen:
- Fig. 1: eine erfindungsgemäße Vorrichtung zur Bestimmung der Konzentration mehrer Hämoglobinderivate,
- Fig. 2: eine vorteilhafte Variante der erfindungsgemäßen Vorrichtung, die
- Fig. 3 bis 6: Ausführungsvarianten der Detektionseinrichtung in einer Vorrichtung gemäß Fig. 1, sowie
- Fig. 7: mit einer Vorrichtung gemäß Fig. 1 oder 2 erfasste Absorptionsspektren.

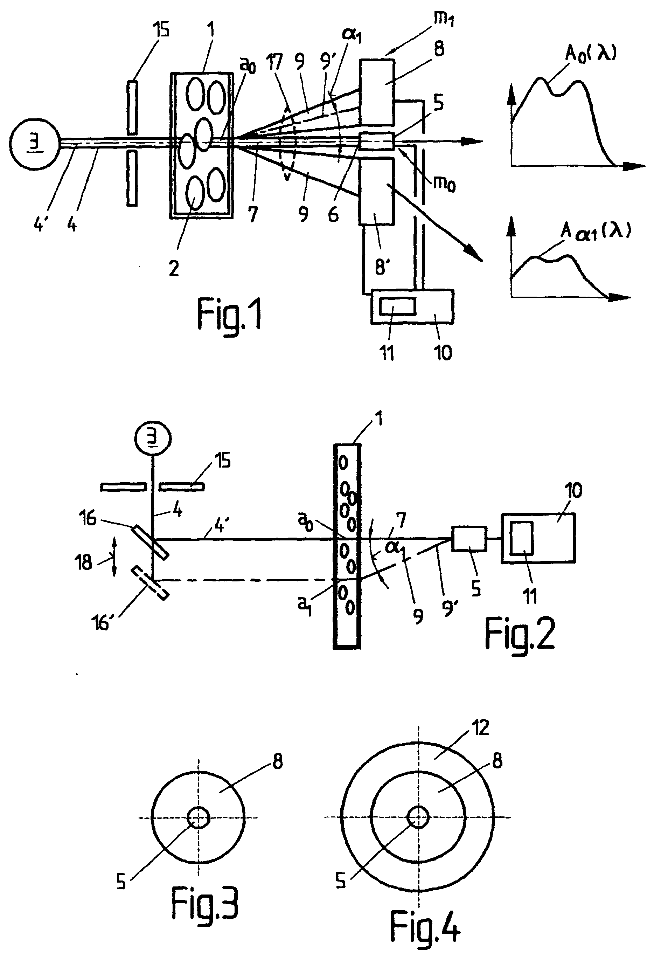

Die in Fig. 1 dargestellte Vorrichtung zur Bestimmung der Konzentration von n Hämoglobinderivaten weist In einer Küvette 1 eine unverdünnte, unhämolisierte Vollblutprobe 2 auf. Eine Einrichtung 3 stellt einen Primärstrahl 4 zur Verfügung, welcher zumindest n monochromatische, schmalbandige Strahlungsanteile unterschiedlicher Wellenlänge λᵢ aufweist. Eine erste Detektionseinrichtung 5 in einer ersten Messposition m₀, welche in der Achse 4' des Primärstrahles 4 bzw. des Zentralstrahles 7 angeordnet ist, weist eine relativ kleine Strahleintrittsfläche 6 auf und misst im wesentlichen Strahlung aus dem Zentralstrahl 7. In einer zweiten Messposition m₁, in einem Winkel α₁ zur Achse 4' des Primärstrahles 4 ist eine weitere Detektionseinrichtung 8 zur Erfassung der Streustrahlung 9 in der Achse 9' angeordnet. Beide Detektionseinrichtungen 5 und 8 erfassen Strahlung aus einem Messort a₀ und stehen über Signalleitungen mit einer Auswerteeinrichtung 10 in Verbindung, welche eine Einheit 11 zur Berechnung der Konzentration der n Hämoglobinderivate mittels einer abgespeicherten Kalibriermatrix aufweist. Die Erzeugung der schmalbandigen monochromatischen Strahlungen kann auf unterschiedliche Weise durchgeführt werden. Beispielsweise kann die Strahlung eines Weißlichtstrahles durch ein Beugungsgitter oder ein Prisma spektral zerlegt werden. Weiters ist es möglich, breitbandige monochromatische Strahlung über Interferenzfilter zu filtern oder einzelne Emissionslinien einer Spektrallinienlampe mit Hilfe von Filtern zu selektionieren.

Zur Berechnung von vier Hämoglobinderivaten wird die Probe mit mindestens vier schmalbandigen (Bandbreite kleiner 5 nm, bevorzugt 2 nm) monochromatischen Strahlungen verschiedener Wellenlänge durchstrahlt. Das ergibt mindestens 2 n = 8 spektrale Signale: vier Signale der ersten Detektionseinrichtung 5 sowie vier der zweiten Detektionseinrichtung 8. Die unterschiedlichen monochromatischen Strahlungen des Primärstrahles können entweder zeitsequentiell oder gleichzeitig die Probe durchlaufen. Bevorzugt wird eine zeitsequentielle Durchstrahlung, was den Messaufwand minimiert. Um statistische Kalibrationsmethoden gut nutzen zu können (wie PLS und PCR) muss das System stark überbestimmt sein, d. h. n viel größer vier (bei vier Unbekannten). Bevorzugt werden 66 Strahlungsanteile. Die Wellenlängen können aus dem sichtbaren und nahen Infrarotspektrum (500 bis 700 nm) beliebig ausgewählt werden. Bevorzugt werden z. B. folgende 66 Wellenlängen: 520 bis 650 nm im Abstand von 2 nm.

Wie in Fig. 1 dargestellt, kann der Primärstrahl 4 durch eine Blende 15 auf ca. 2 mm kollimiert werden. Die Detektionseinrichtung 5 in der ersten Messposition m₀ erfasst einen Zentralstrahlbereich von 0 bis 5°, vorzugsweise 0 bis 3°, die zweite Detektionseinrichtung 8 in der zweiten Messposition m₁ einen Streustrahlbereich von 5 bis 30°, vorzugsweise von 5 bis 15°. Ein zweiter Detektor 8' kann in einer symmetrischen Streuposition angeordnet sein. Es ist auch möglich, nur eine Detektionseinrichtung zu verwenden und diese aus der Messposition m₀ in die Messposition m₁ zu verdrehen oder zu verschieben.

Zur besseren Trennung des kollimierten Zentralstrahles 7 vom diffus transmittierten Streustrahl 9 kann zwischen der Küvette 1 und den Detektionseinrichtungen 5 und 8 eine optische Einrichtung 17, vorzugsweise eine Linse oder ein Linsensystem, angeordnet sein.

Die in Fig. 2 dargestellte Ausführungsvariante gewinnt die Information aus dem Streustrahl dadurch, dass die Achse 4' des Primärstrahles von einem ersten Messort a₀ in der Küvette 1 in einen zweiten Messort a₁ verschoben wird. Dies kann beispielsweise durch Verschieben einer optischen Einrichtung 16, z. B. eines Spiegels, entlang des Pfells 18 in eine Position 16' bewerkstelligt werden. Die beiden Messorte a₀ und a₁ weisen im Hinblick auf die Messposition m₀ mit der Detektionseinrichtung 5 einen Winkel α₁ auf. Der Spiegel 16 könnte auch zur Erzeugung weiterer Messorte stufenweise verschoben bzw. gedreht werden.

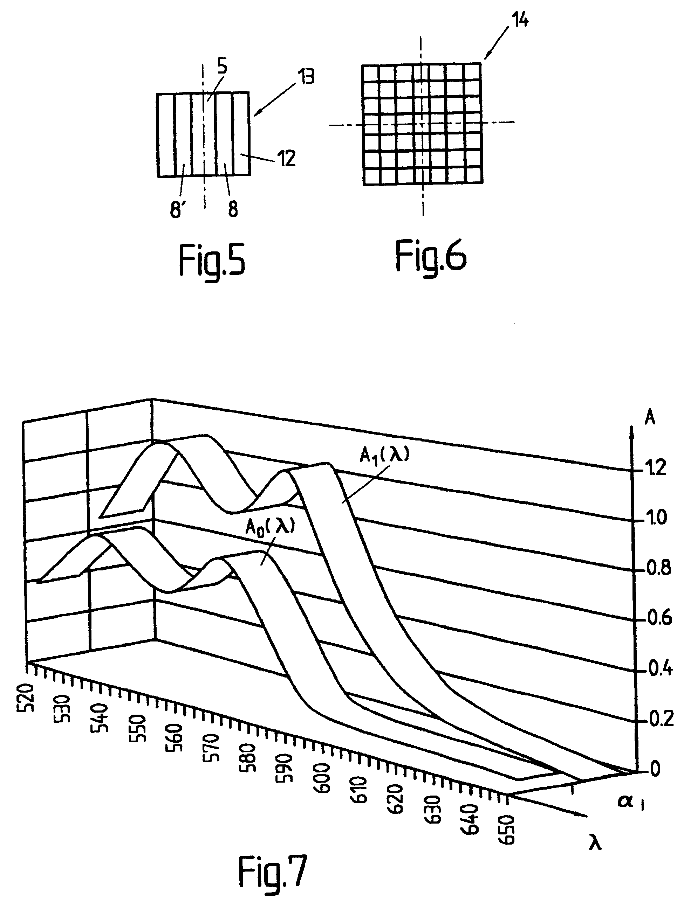

Wie in den Fig. 3 und 4 dargestellt, können die Detektionseinrichtungen 8 und 12 (Flg. 4) bei einer Vorrichtung nach Fig. 1 kreisringförmig um die zentral angeordnete erste Detektionseinrichtung 5 angeordnet sein. Neben Fotodioden können dabei auch bildgebende Lichtwellenleiterbündel eingesetzt werden. In einer weiteren Ausführungsvariante gemäß Fig. 5 wird ein zeilenförmiges Diodenarray 13 eingesetzt oder gemäß Fig. 6 eine CCD-Einheit 14 verwendet.

Die Fig. 7 zeigt die unterschiedlichen Absorptionsspektren für verschiedene Messpositionen α₁.

## Patentansprüche

1. Vorrichtung zur Bestimmung der Konzentration von n Hämoglobinderivaten in einer unverdünnten, unhämolysierten, in einer Küvette (1) vorliegenden Vollblutprobe (2), mit einer Einrichtung (3) zur Bereitstellung eines kollimierten Primärstrahles (4), welcher zumindest n im wesentlichen monochromatische, schmalbandige Strahlungsanteile unterschiedlicher Wellenlänge aufweist, mit einer Detektionseinrichtung (5), welche die die Küvette (1) durchdringende Strahlung misst, sowie mit einer mit der Detektionseinrichtung (5) verbundenen Auswerteeinrichtung (10) **dadurch gekennzeichnet, dass** zur spektralen Erfassung eines kollimierten Zentralstrahles (7) und zumindest eines Streustrahles (9) eine optische Einrichtung (16), vorzugsweise ein drehbarer oder verschiebbarer Spiegel im Weg des Primärstrahles (4) angeordnet ist, sodass der Primärstrahl (4) in einer Grundstellung der optischen Einrichtung (16) einen ersten Messort (a₀) und in zumindest einer weiteren Stellung der optischen Einrichtung (16') durch Umlenkung des Primärstrahles (4) einen weiteren Messort (a₁) in der Küvette (1) definiert, dass die Detektion des durch die Küvette (1) transmittierten Zentralstrahles (7), welcher vom ersten Messort (a₀) in der Küvette (1) ausgeht, mittels der Detektionseinrichtung (5) an einer Messposition auf der Achse (4') des Primärstrahles (4) erfolgt, dass die Detektion des Streustrahles (9) ausgehend vom zweiten Messort (a₁) in der Küvette (1) mittels der Detektionseinrichtung (5) in derselben Messposition erfolgt, wobei die Achsen (4', 9') des Zentralstrahles (7) und des bzw. der zu detektierenden Streustrahlen (9) Winkel αᵢ einschließen, sowie dass die Auswerteeinrichtung (10) eine Einheit (11) zur Berechnung der Konzentration der n Hämoglobinderivate aus den in den zumindest zwei Messgeometrien, die durch den ersten Messort (a₀) und den zweiten Messort (a₁) definiert sind, erfassten zumindest 2n Messwerten und einer vorbestimmten Kalibrier-matrix aufweist.

2. Vorrichtung zur Bestimmung der Konzentration von n Hämoglobinderivaten in einer unverdünnten, unhämolysierten, in einer Küvette (1) vorliegenden Vollblutprobe (2), mit einer Einrichtung (3) zur Bereitstellung eines kollimierten Primärstrahles (4), welcher zumindest n im wesentlichen monochromatische, schmalbandige Strahlungsanteile unterschiedlicher Wellenlängen aufweist, mit einer Detektionseinrichtung (5), welche die die Küvette (1) durchdringende Strahlung misst, sowie mit einer mit der Detektionseinrichtung (5) verbundenen Auswerteeinrichtung (10) **dadurch gekennzeichnet, dass** zur spektralen Erfassung eines kollimierten, durch die Küvette (1) transmittierten Zentralstrahles (7) und zumindest eines Streustrahles (9) neben einer ersten Detektionseinrichtung (5) an einer ersten Messposition (m₀) auf der Achse (4') des Primärstrahles (4) zumindest eine weitere Detektionseinrichtung (8) zur Streulichtmessung an einer zweiten Messposition (m₁) im Winkel αᵢ zur Achse (4') des Zentralstrahles (7) angeordnet ist, dass die zweite Detektionseinrichtung (8) kreisringförmig um die zentral angeordnete erste Detektionseinrichtung (5) angeordnet ist, wobei die Achsen (4', 9') des Zentralstrahles (7) und des bzw. der Streustrahlen (9) Winkel αᵢ einschließen, sowie dass die Auswerteeinrichtung (10) eine Einheit (11) zur Berechnung der Konzentration der n Hämoglobinderivate aus den von den zumindest zwei Detektionseinrichtungen (5, 8) erfassten, zumindest 2n Messwerten und einer vorbestimmten Kalibriermatrix aufweist.

3. Vorrichtung nach Anspruch 2, **dadurch gekennzeichnet, dass** die Detektionseinrichtung (5) in der ersten Messposition (m₀) mit einer kleinen Strahleintrittsfläche (6) einen Zentralstrahlbereich von 0 bis 5°, vorzugsweise 0 bis 3° erfasst, sowie dass jene (8) in der zweiten Messposition (m₁) einen Streustrahlbereich erfasst, welcher an den Zentralstrahlbereich anschließt.

4. Vorrichtung nach Anspruch 2 oder 3, **dadurch gekennzeichnet, dass** alle Detektionseinrichtungen (5, 8, 12) in Form eines Diodenarrays (13) angeordnet sind.

5. Vorrichtung nach Anspruch 2 oder 3, **dadurch gekennzeichnet, dass** alle Detektionseinrichtungen (5, 8, 12) zu einer CCD-Einheit (14) zusammengefasst sind.

6. Vorrichtung nach einem der Ansprüche 1 bis 5, **dadurch gekennzeichnet, dass** zwischen der Küvette (1) und der bzw. den Detektionseinrichtungen (5, 8, 12) eine optische Einrichtung (17) zur Trennung von kollimiertem Zentralstrahl (7) und diffus transmittiertem Streustrahl (9) vorgesehen ist.

7. Verwendung einer Vorrichtung nach Anspruch 1 oder nach Anspruch 2 zur in-vitro Bestimmung der Konzentration von n Hämoglobinderivaten in einer unverdünnten, unhämolysierten Vollblutprobe, **dadurch gekennzeichnet**,
a) dass In die Probe ein Primärstrahl eingestrahlt wird, welcher zumindest n im wesentlichen monochromatische Strahlungsanteile unterschiedlicher Wellenlänge aufweist,
b) dass die die Probe durchdringende Strahlung in einer ersten, in der Achse des Primärstrahles bzw. des Zentralstrahles liegenden Messposition delektiert wird, wobei ein Satz von Absorptionswerten A₀ (λ) im Zentralstrahl bestimmt wird,
c) dass die die Probe durchdringende Strahlung in zumindest einer weiteren, in der Achse eines Streustrahles liegenden Messposition detektiert wird, welche einen Winkel αᵢ zur Achse des Primärstrahles einschließt, wobei zumindest ein weiterer Satz von Absorptionswerten Aαᵢ (λ) in der Streustrahlung bestimmt wird, sowie
d) dass die Konzentration der n Hämoglobinderivate als Funktion der Absorptionswerte A₀(λ), A_{αi}(λ) und einer vorbestimmten Kalibrationsmatrix K berechnet wird.

8. Verwendung nach Anspruch 7, **dadurch gekennzeichnet, dass** anstelle der Absorptionswerte die Transmissionswerte für den Zentral- und den zumindest einen Streustrahl bestimmt werden.

## Claims

1. Apparatus for determining the concentrations of n haemoglobin derivatives in an undiluted, unhaemolyzed whole blood sample 2 provided in a cuvette 1, comprising a device 3 providing a collimated primary beam 4 with at least n, substantially monochromatic, narrow-band radiation components of different wavelengths, and a detection device 5 for measurement of the radiation passing through said cuvette 1, as well as an evaluation device 10 connected with said detection device 5, **characterized in that** for spectral detection of a collimated central beam 7 and at least one scatter beam 9 an optical device 16, preferably a rotatable or slideable mirror, is provided in the path of the primary beam 4, such that said primary beam 4 defines a first measuring location a₀ in the cuvette 1 in a basic position of the optical device 16, and a second measuring location a₁ in the cuvette 1 in at least one further position of the optical device 16', and further that detection of the central beam 7 which is transmitted through the cuvette 1 and departs from the first measuring location a₀ in the cuvette 1, is performed by the detection device 5 in a measuring position on the axis 4' of the primary beam 4, and further that detection of the scatter beam 9 departing from the second measuring location a₁ in the cuvette 1 is performed by the detection device 5 in the same measuring position, the axes 4', 9' of the central beam 7 and the scatter beam(s) 9 forming angles α₁, and further **characterized in that** the evaluation device 10 includes a unit 11 for calculating the concentrations of the n haemoglobin derivatives from the at least 2n measurement values obtained in the at least two measuring geometries defined by the first measuring location a₀ and the second measuring location a₁, and a predetermined calibration matrix.

2. Apparatus for determining the concentrations of n haemoglobin derivatives in an undiluted, unhaemolyzed whole blood sample 2 provided in a cuvette 1, comprising a device 3 providing a collimated primary beam 4 with at least n, substantially monochromatic, narrow-band radiation components of different wavelengths, and a detection device 5 for measurement of the radiation passing through said cuvette 1, as well as an evaluation device 10 connected with said detection device 5, **characterized in that** for spectral detection of a collimated central beam 7 transmitted through the cuvette 1 and at least one scatter beam 9, in addition to a first detection device 5 in a first measuring position m₀ on the axis 4' of the primary beam 4 at least one further detection device 8 is provided for measuring scattered light in a second measuring position m₁ at an angle α₁ relative to the axis 4' of the central beam 7, and that the second detection device 8 is arranged in a circular ring around the centrally located first detection device 5, the axes 4',9' of the central beam 7 and the scatter beam(s) 9 forming angles α₁, and further that the evaluation device 10 includes a unit 11 for calculating the concentrations of the n haemoglobin derivatives from the at least 2n measurement values obtained by the at least two detection devices (5, 8) and a predetermined calibration matrix.

3. Apparatus according to claim 2, **characterized in that** the detection device 5 in the first measuring position m₀ with a small beam entrance area 6 covers a central beam range of 0-5°, and preferably 0-3°, and the second detection device 8 in the second measuring position m₁ a radiation scatter range which is adjacent to the central beam range.

4. Apparatus according to claim 2 or 3, **characterized in that** all detection devices 5, 8, 12 are arranged as a diode array 13.

5. Apparatus according to claim 2 or 3, **characterized in that** all detection devices 5, 8, 12 are combined into a CCD unit 14.

6. Apparatus according to any of claims 1 to 5, **characterized in that** an optical device 17 is placed between the cuvette 1 and the detection device(s) 5, 8, 12, in order to separate the collimated central beam 7 from the diffusely transmitted scatter beam 9.

7. Use of apparatus according to claim 1 or claim 2 for in-vitro determination of the concentrations of n haemoglobin derivatives in an undiluted, unhaemolyzed whole blood sample, **characterized in that**
a) the sample is irradiated with a primary beam of at least n substantially monochromatic radiation components of different wavelengths;
b) the radiation penetrating the sample is detected in a first measuring position located in the axis of the primary beam or central beam, whereby a set of absorption values A₀(λ) is determined in the central beam;
c) the radiation penetrating the sample is detected in at least one other measuring position located in the axis of a scatter beam, which forms an angle α₁ with the axis of the primary beam, whereby at least one more set of absorption values A_{α1}(λ) is determined in the scattered radiation;
d) the concentrations of n haemoglobin derivatives are calculated as functions of absorption values A₀(λ), A_{α1}(λ) and a predetermined calibration matrix K.

8. Use according to claim 7, **characterized in that** instead of absorption values, the transmission values are determined for the central beam and the at least one scatter beam.

## Revendications

1. Dispositif pour la détermination de la concentration de n dérivés d'hémoglobine dans un échantillon de sang entier (2) non dilué et non hémolysé présent dans une cuvette (1), avec une installation (3) destinée à produire un faisceau primaire collimaté (4) qui présente au moins n fractions de rayonnement monochromatiques à bande étroite de longueurs d'onde différentes, avec une installation de détection (5) qui mesure le rayonnement traversant la cuvette (1) et avec une installation d'interprétation (10) communiquant avec l'installation de détection (5), **caractérisé en ce qu'**en vue de la détection spectrale d'un faisceau central collimaté (7) et d'au moins un faisceau diffusé (9), il est prévu une installation optique (16), de préférence un miroir tournant ou coulissant, sur le trajet du faisceau primaire (4), de telle sorte que le faisceau primaire (4) définisse dans une position de base de l'installation optique (16) un premier site de mesure (a₀) et dans au moins une autre position du dispositif optique (16'), par déviation du faisceau primaire (4), un autre point de mesure (a₁) dans la cuvette (1), **en ce que** la détection du faisceau central (7) transmis par la cuvette (1) qui part du premier point de mesure (a₀) dans la cuvette (1) est réalisée au moyen de l'installation de détection (5) dans une position de mesure sur l'axe (4') du faisceau primaire (4), **en ce que** la détection du faisceau diffusé (9) est réalisée à partir du deuxième point de mesure (a₁) dans la cuvette au moyen de l'installation de détection (5) dans la même position de mesure, les axes (4', 9') du faisceau central (7) et du ou des faisceaux diffusés (9) à détecter formant des angles α₁, et **en ce que** l'installation d'interprétation (10) comprend une unité (11) pour le calcul de la concentration des n dérivés d'hémoglobine à partir des 2n valeurs de mesure au moins relevées dans les deux géométries de mesure au moins définies par le premier site de mesure (a₀) et le second site de mesure (a₁) et présente une grille de calibration prédéterminée.

2. Dispositif pour la détermination de la concentration de n dérivés d'hémoglobine dans un échantillon de sang entier (2) non dilué et non hémolysé présent dans une cuvette (1), avec une installation (3) destinée à produire un faisceau primaire collimaté (4) qui présente au moins n fractions de rayonnement monochromatiques à bande étroite de longueurs d'onde différentes, avec une installation de détection (5) qui mesure le rayonnement traversant la cuvette (1) et avec une installation d'interprétation (10) communiquant avec l'installation de détection (5), **caractérisé en ce qu'**en vue de la détection spectrale d'un faisceau central collimaté (7) transmis par la cuvette (1) et d'au moins un faisceau diffusé (9), il est prévu outre une première installation de détection (5) située dans une première position de mesure (m₀) sur l'axe (4') du faisceau primaire (4) au moins une autre installation de détection (8) pour la mesure de la lumière diffusée en une deuxième position de mesure (m₁) formant un angle α₁ par rapport à l'axe (4') du faisceau central (7), **en ce que** la seconde installation de détection (8) est disposée en anneau circulaire autour de la première installation de détection (5) disposée au centre, les axes (4', 9') du faisceau central (7) et du ou des faisceaux diffusés (9) formant des angles α₁, et **en ce que** l'installation d'interprétation (10) comprend une unité (11) pour le calcul de la concentration des n dérivés d'hémoglobine à partir des 2n valeurs de mesure au moins relevées par les installations de détection (5, 8) au nombre de deux au moins et présente une grille de calibration prédéterminée.

3. Dispositif selon la revendication 2, **caractérisé en ce que** l'installation de détection (5) située dans la première position de mesure (m₀) capte par une petite surface d'entrée du faisceau (6) une zone de faisceau central de 0 à 5°, de préférence de 0 à 3°, et **en ce que** l'installation de détection (8) située dans la deuxième position de mesure (m₁) capte une zone de diffusion du faisceau qui fait suite à la zone du faisceau central.

4. Dispositif selon la revendication 2 ou 3, **caractérisé en ce que** toutes les installations de détection (5, 8, 12) sont disposées sous la forme d'un réseau de diodes (13).

5. Dispositif selon la revendication 2 ou 3, **caractérisé en ce que** toutes les installations de détection (5, 8, 12) sont réunies dans une unité de dispositif à transfert de charge (14).

6. Dispositif selon l'une quelconque des revendications 1 à 5, **caractérisé en ce qu'**il est prévu entre la cuvette (1) et la ou les installations de détection (5, 8, 12) une installation optique (17) destinée à séparer le faisceau central collimaté (7) du faisceau diffusé transmis (9).

7. Utilisation d'un dispositif selon la revendication 1 ou 2 pour la détermination *in vitro* de la concentration de n dérivés d'hémoglobine dans un échantillon de sang entier non dilué et non hémolysé, **caractérisée en ce que** :
a) un faisceau primaire comprenant au moins n fractions de rayonnement sensiblement monochromatiques et de longueurs d'onde différentes est projeté sur l'échantillon,
b) **en ce que** le rayonnement traversant l'échantillon est détecté dans une première position de mesure située dans l'axe du faisceau primaire ou faisceau central, de sorte qu'un ensemble de valeurs d'absorption A₀ (λ) est déterminé dans le faisceau central,
c) **en ce que** le rayonnement traversant l'échantillon est détecté dans au moins une position de mesure située dans l'axe du faisceau diffusé et formant un angle α₁ par rapport à l'axe du faisceau primaire, de sorte qu'au moins un autre ensemble de valeurs d'absorption A_{α1} (λ) est déterminé dans le rayonnement diffusé, et
d) **en ce que** la concentration des n dérivés d'hémoglobine est calculée en fonction des valeurs d'absorption A₀(λ), A_{α1}(λ) et d'une grille de calibration K prédéterminée.

8. Utilisation selon la revendication 7, **caractérisée en ce qu'**au lieu des valeurs d'absorption, on détermine les valeurs de transmission pour le faisceau central et au moins un faisceau diffusé.
